# EUROPEAN PATENT SPECIFICATION

(11) **EP 2 992 853 B1**
(45) Date of publication and mention of the grant of the patent: **16.11.2016**
(21) Application number: 13808058.5
(22) Date of filing: 19.09.2013
(51) Int. Cl.: A61C 8/00

(54) **METHOD FOR PRODUCING A DENTURE AND DENTURE PORUDCED WITH THIS METHOD**
VERFHAREN ZUR HERSTELLUNG VON ZAHNERSATZ UND ZAHNERSATZ, DER NACH DIESEM VERFAHREN HERGESTELLT IST
PROCÉDÉ DE FABRICATION D'UNE PROTHÈSE DENTAIRE ET PROTHÈSE DENTAIRE FABRIQUÉE SELON CE PROCÉDÉ

(30) Priority: 03.07.2013 ES 201331001
(43) Date of publication of application: 09.03.2016
(73) Proprietor: Marcus Lauch S.L., 38400 Puerto de La Cruz (Santa Cruz de Tenerife) (ES); Cubillo Blasco, Victor, 38002 Santa Cruz de Tenerife (ES); Samrei, Volker, 38530 Las Cuevecitas (Santa Cruz de Tenerife) (ES)
(72) Inventor: CUBILLO BLASCO, Victor, E-38002 Santa Cruz de Tenerife (ES); SAMREI, Volker, E-38530 Las Cuevecitas (Santa Cruz de Tenerife) (ES); LAUCH, Markus, E-38400 Puerto de La Cruz (Santa Cruz de Tenerife) (ES)
(74) Representative: Pons
(86) International application number: PCT/ES2013/070656
(87) International publication number: WO 2015/001150

(56) References cited:
- EP-A1- 0 501 940
- WO-A1-00/27556
- DE-A1-102012 020 926
- ROBERT SCHNEIDER: "Full Mouth Restoration on Dental Implants Utilizing Titanium Laser-Welded Frameworks", JOURNAL OF ESTHETIC AND RESTORATIVE DENTISTRY, vol. 21, no. 4, 1 August 2009 (2009-08-01) , pages 215-226, XP055115546, ISSN: 1496-4155, DOI: 10.1111/j.1708-8240.2009.00265.x
- Peter Gehrke ET AL: "Intra-oral welding of temporary implant abutments with a pre-fabricated titanium bar", implants 3.2005, 1 January 2005 (2005-01-01), XP055050942, Retrieved from the Internet: URL:http://www.dentistaitaliano.it/documen ts/Impants.3.2005-Gehrke.Degidi.Spanel.Dho m.Piattelli.pdf [retrieved on 2013-01-24]

## Description

### OBJECT OF THE INVENTION

The present invention can be included in the technical field of methods for manufacturing dental prosthesis and in that of dental prosthesis manufactured by means of said methods.

The object of the invention is a method for manufacturing a dental prosthesis which allows the subsequent implantation of the prosthesis in the user immediately, without having to use a provisional prosthesis.

### BACKGROUND OF THE INVENTION

In usual dentistry, implants are used for the replacement of natural teeth over which prosthetic structures are fixed. A prosthetic structure usually consists of a base body to attach the prosthetic structure to the dental implant, and a main body individually adapted to the tooth to be replaced or to the remaining teeth, or to the maxilla conditions. However, the main body does not constitute the visible area of the implanted tooth, since it is covered up by the prosthetic restoration.

Currently, there are two techniques in use for the production of these types of structures: casting and milling.

In the casting process, a wax pattern, substantially corresponding to the main subsequent body is moulded over a base body, commercially available. A pattern is then made from said wax pattern. Next, the wax is removed by melting in a furnace, obtaining a negative pattern of the main body. Then, by means of casting, this negative pattern is filled with a suitable molten material such as, for example, noble alloys, semi-noble or alloys devoid of noble metals. During this process, the pre-manufactured base body fuses with the main body, being firmly attached thereto. The result is a prosthetics structure which usually has to be hand polished as well.

In the milling process, milled structures are made from a metal block (generally Titanium), previously scanning the positive pattern obtained from the negative pattern. The cost is very high and its manufacture requires a longer time than the time available to perform reconstruction on implants by means of immediate loading.

More specifically, the immediate loading o functioning in implantology is a technique properly documented in its clinical and histological aspects:
- In the clinical aspect, most of the implantology works carried out have shown high success rates, similar to those of the conventional implantology.
- In the histological aspect, a great amount of essays have been carried out reporting even a better quality in the osseointegration in immediate load implants than in those which are carried out by delayed loading.

All-on-four technique (all-on-4™), developed by Dr Paolo Maló, is a system that allows fixed complete restoration with implants in the superior and/or inferior maxilla of the completely edentulous patient, or that patient who will shortly be bound to complete edentulism.

Its name comes from this technique only using 4 implants per maxilla, though there may be necessary 5 or 6 in certain cases for the superior maxilla. One of the most appealing aspects of said technique is that it can be applied in a high percentage of cases.

The lower implants are interforaminal implants, and in that area their insertion is usually possible, even in extreme reabsorption situations; while in the superior maxilla the implants are placed between the maxillary sinuses, greatly reducing the regeneration requirement which would contraindicate the technique, with success rates higher than 95%.

The original technique requires cooperation with the laboratory so that, in a few hours, the patient leaves the clinic with the abutments being inserted and the fixed implant-supported prosthesis being screwed up.

The treatment provides the patient a fixed acrylic resin restoration with no metallic frame, so as to proceed, after 5 or 6 months, to take the dental impressions in order to realize the definitive restoration, acrylic or ceramic upon a titanium structure or another material structure.

The philosophy of the all-on-four procedure is based, for the inferior maxilla, in the use of four implants in the interforaminal anterior mandibular area and in the angulation of the posterior implants with the apices thereof towards the mesial area, so that the intersection point may be situated at the vertical of the mentalis or, even a bit distal from it, so as to reduce the distal cantilever of the future prosthesis and to increase the implant-bone binding surface, since longer implants may be used. The anchoring of the implants in the anterior bone improves stability, since this is usually of better quality than that located in the posterior areas of the maxillae.

In the method of the state of the art, the implants are fixed to each other by means of a resin prosthesis adapted thereto, prosthesis which is implanted in the patient for said patient to keep it for a period of approximately 5 or 6 months. The definite structure is manufactured once the implants are totally osseointegrated. That means that accuracy has to be optimum to achieve a completely passive adjustment, without lateral forces on the implants. If this did not happen, said structure would have to be made again, with the consequent waste of time and cost.

Both manufacturing processes for prosthetic structures are time consuming and, in particular, require a great amount of handwork and/or high precision work, therefore being expensive.

Publication "Journal of esthetic and restorative dentistry, R. Schneider: "Full Mouth Restoration on Dental Implants Utilizing Titanium Laser-Welded Frameworks", vol. 21, no 4, 1 August 2009, pages 215-226 discloses a dental prosthesis according to the preamble of claim 1.

### DESCRIPTION OF THE INVENTION

The present invention solves the technical problem stated, by means of a method for manufacturing a dental prosthesis according to claim 3 which allows to provide the patient with fixed teeth immediately, avoiding transition periods with provisional removable prosthesis. For this purpose, it is necessary a close collaboration oral surgeon- dental technician. The invention also relates to a dental prosthesis according to claim 1.

The method for manufacturing a dental prosthesis comprises several steps:
- a preparation step, in which one or several individual trays are made for the dental impression of the teeth shape location of the patient. Optionally, in this preparation step, the method includes the manufacture of a surgical splint used to place some implants and abutments for the dental prosthesis in its predesigned position,
- a step for taking impression records, in order to obtain a mould corresponding to the negative of the position of implants placed in the patient maxilla.
- a preparation step to prepare a transferred pattern. This pattern is a positive pattern obtained from the plaster casting of the mould from the previous step, using pieces being analogous to the implants in which fixing of some abutments will be carried out, said abutments making up the base of the structure main body.
- a forming step of the teeth and of a titanium structural bar, comprising a folding sub-step for the structural titanium bar to be adapted to the curvature defined by the dental prosthesis abutments. It is a distinguishing fact of the present invention that the teeth and their position are designed in the first place, and afterwards the bar is designed, adapted to the teeth position. This is what allows obtaining a minimum volume of the denture,
- a welding step, to weld the titanium structural bar, previously folded, to the abutments fixed to the pattern of the previous step. Once the welding step is finished, an opacity treatment is applied to the whole structure to prevent the colour of the metal from being revealed through the teeth,
- a relocation step of the teeth formed in the pattern where the titanium structural bar has been folded, welded and made opaque through the abutments of the previous step, and
- a finishing step, in which discrepancies between the titanium structural bar and the teeth arch are sealed and refilled by means of composite.

Finally and optionally, the method comprises a brushing and polishing step of the dental prosthesis obtained in the previous step.

The invention also refers to a dental prosthesis comprising a set of teeth, a set of abutments which can be coupled to a set of implants and a titanium structural bar welded to the abutments, wherein the teeth are attached to the abutments and the titanium structural bar by means of a filling composite.

In this prosthesis, the titanium structural bar serves as a support for the teeth and gingiva, in case this is necessary. Once the osseointegration period has ended, the prosthesis will be modified in a few hours so as to achieve total occlusion and refilling of spaces that appear between the prosthesis and the gingiva, originated by post-surgical closing and gingival remodelling which is not an object of the present invention.

As the position of implants is defined by the pattern abutments, any micro-maladjustment of the bar with respect to the implants position is defined in the pattern by abutments, due to the micro-movement the bone allows to the recently placed implants without risking its integration.

In this way, the method of manufacturing of a dental prosthesis according to the present invention makes it possible to obtain a high resistance dental prosthesis, since the metallic structure made the first day provides a tensile strength impossible to achieve with the methods known in the state of the art which use prosthesis without a metallic reinforcement.

Furthermore, the volume of the dental prosthesis obtained with the manufacture method of the present invention is reduced with respect to the volume of the dental prosthesis obtained with state-of-the-art methods, providing important functional, aesthetic and hygienic improvements to the patient.

The dental prosthesis finishing, obtained with the manufacturing method of the present invention, is more similar to a real denture than any of the prosthesis obtained using the methods from the state of the art. The use of the titanium bar, allows the volume of said element supporting the stress, to be very much reduced since its hardness is much higher than that of the acrylic resin, conventionally used for provisional dentures used in the state of the art.

It also allows a moulding of the teeth nearer to the natural appearance thereof, due to the use of composite or compound resin, which is used to mould the prosthesis teeth and gingiva in case it is necessary. The aesthetics achieved in the dental prosthesis with the use of composite is better than that obtained with the acrylic resin thanks to the great variety of colours and make-ups available for layer technique, moulding the tooth from scratch and not only with pre-manufactured and standard teeth, as it is used in the state of the art. The finishing obtained by polishing this material minimizes the residues accumulation on the surface, which will result in colour changes. The composite resistance have an influence on the low effect of food thereon when scratching the surface, which would result in undesired staining of the material and in a rough feeling for the patient.

The special configuration of the prosthesis obtained by the manufacturing method of the present invention, allows ferulization of implants immediately after their placement, obtaining a homogeneous distribution of the loads among the implants involved. This influences positively on the bone-implant integration, since the load amount received by each implant is reduced. In the prosthesis from the state of the art, by using acrylic resin without metallic reinforcement, the loads received by each implant are very different, reaching sometimes undesired load peaks which are adverse to osseointegration. Furthermore, the composite used in the prosthesis of the present invention absorbs part of the forces exerted thereon.

The special configuration of the prosthesis obtained by the manufacturing method of the present invention, allows the implants, once placed and integrated with the bone, not to undergo any movement, as lateral forces will be applied on them which are habitual in orthodontics. The consequence of these forces is the bone loss around the implant and the subsequent loss thereof.

The economic cost for the patient is reduced with the dental prosthesis obtained by the manufacturing method of the present invention, since a single prosthesis is manufactured, the structure of which will be the same from the first day, even though it undergoes retouching, as well as reducing the possibilities of maladjustment and subsequent repetition of the work done. In the case adjustments, fixings or corrections have to be done in the denture or bar, these are done in a few hours and with a minimal cost. Always keeping the initial properties of the assembly unaltered.

Furthermore, the dental prosthesis hygiene improves the hygiene of the space between prosthesis and gingiva due to its reduced volume, and with it the gingiva area covered by the prosthesis. By reducing this area to a minimum, the area which has to be cleaner is also reduced.

### DESCRIPTION OF THE DRAWINGS

To implement the present description and in order to provide a better understanding of the characteristics of the invention, according to a preferred embodiment thereof, a set of drawings is attached as part of this description, with an illustrative but not limitative purpose, which represents the following:
Figure 1.- It shows a perspective view of an individual impression tray, made in the manufacturing method of the present invention.
Figure 2.- It shows a perspective view of the surgical splint made in the prosthesis manufacturing method of the present invention.
Figure 3.- It shows a perspective view of the pattern obtained from the negative mould of the implants position placed in the patient maxilla, on which abutments have been arranged.
Figure 4.- It shows a perspective view of the implant placement in the patient maxilla, step which is not part of the method of the present invention.
Figure 5.- It shows a perspective view of the negative obtained from the patient maxilla once the implants are placed, step which again is not part of the method of the present invention.
Figure 6.- It shows a perspective view of the surgical splint of figure 2 positioned on the pattern of figure 3 to verify the abutments position.
Figure 7.- It shows a perspective view of the titanium structural bar welded over the abutments shown in Figure 3.
Figure 8.- It shows a perspective view of the teeth manufactured by means of the manufacturing individual tray of Figure 1 once they have been placed over the pattern shown in Figure 7, once this mould already includes the abutments and the titanium structural bar.
Figure 9.- It shows a perspective view of the finishing step for the structural bar and refilling with composite of the prosthesis of Figure 8.
Figure 10.- It shows a perspective view of the carving step of the dental prosthesis of the present invention.

### PREFERRED EMBODIMENT OF THE INVENTION

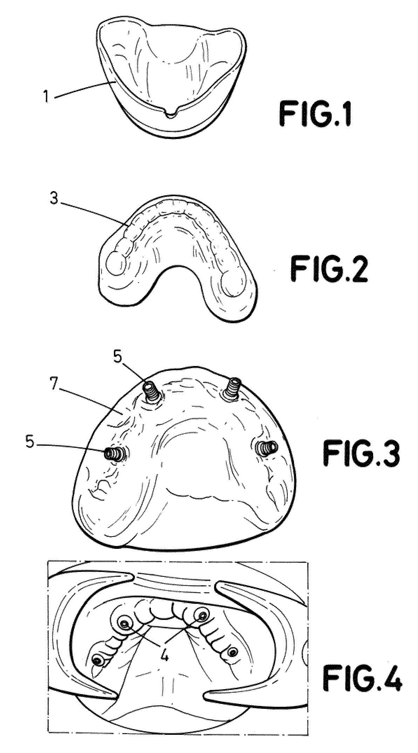

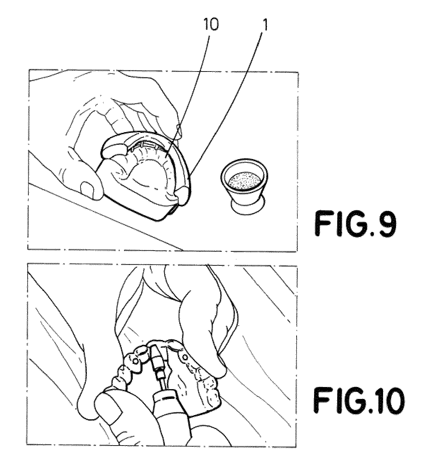

Now, referring to figures 1 to 10 above, there follows a detailed description of a preferred embodiment of the invention.

The method for manufacturing a dental prosthesis comprises a preparation step, in which one or several individual trays are made to take an impression (1) of the condition of the teeth shape (2) of the patient and they are preferably made of an acrylic material on a plaster base.

This preparation step also comprises a step for the production of a surgical splint (3) which is used to place implants (4) and abutments (5) of the dental prosthesis in their predesigned position.

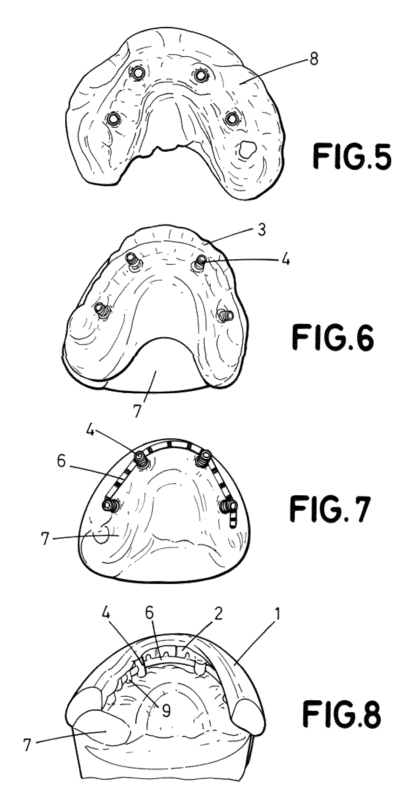

The method also comprises a step to take records of the impression, to obtain a mould (8) corresponding to the negative shown in Figure 5, of the implants (4) placed in the patient maxilla, as it is shown in Figure 4.

Next, the method comprises a preparation step of the transferred pattern (7), which is the positive obtained from plaster casting of the mould (8) previously obtained, using pieces being analogous to the implants to which abutments (5) will be fixed, said abutments making up the base of the structure main body.

The manufacturing method comprises a forming step, for the forming of teeth (2) and of a structural titanium bar (6) comprising a folding substep for the structural titanium bar (6) to be adapted to the curvature defined by the abutments (5) of the dental prosthesis.

Then, the method comprises a testing step to verify the position of the abutments (5) and implants (4) by means of the surgical splint (3).

After that, the method comprises a testing step to check the teeth (2) over the pattern (7).

Then, the method comprises a welding step to weld the structural titanium bar (6) previously folded to the abutments (5) fixed to the pattern (7).

Subsequently, the method comprises a testing step to check the teeth (2) over the pattern (7) with the structural titanium bar (6) already welded to the abutments (5).

Then, the method comprises a welding step to weld retaining elements (9) to the titanium structural bar (6).

Afterwards, the method comprises a relocation step to relocate the teeth (2) formed with composite in the pattern (7) where the titanium structural bar (6) has been folded, welded and made opaque.

Next, the method comprises a finishing step, in which discrepancies between the titanium structural bar and the teeth arch are sealed and refilled by means of composite.

Then, the method comprises a brushing and polishing step, to brush and polish the dental prosthesis obtained from the previous step.

Next, the method includes the following steps of:
- make-up of the dental prosthesis
- making up, moulding and adjustment of the gingiva, and
- adjustment, polishing and final cooking.

The invention also refers to a dental prosthesis comprising a set of teeth (2), a set of abutments (5) which can be coupled to a set of implants (4) and a titanium structural bar (6) welded to said abutments (5), where the teeth (2) are attached to the abutments (5) and to the titanium structural bar (6) by means of filling composite (10).

The titanium structural bar (6) further comprises retaining elements (9) welded to said titanium structural bar (6).

Preferably, the abutments (5), the titanium structural bar (6) and the retaining elements (9) are made of Titanium grade 5, and more preferably, the titanium structural bar (6) has a 3 mm section and the retaining elements (9) a 1.5 mm section.

Preferably, the welding steps are carried out by a Nd: YAG laser type, accomplishing a welding in the whole depth of the titanium structural bar (6), obtaining a rigid structure, of high resistance and great lightness.

## Claims

1. Dental prosthesis comprising:
• a set of teeth (2),
• a set of abutments (5) which can be coupled to a set of implants (4) and,
• a titanium structural bar (6) welded to said abutments (5),
wherein the teeth (2) are attached to the abutments (5) and to the titanium structural bar (6) by means of filling composite (10),
**characterised in that** it also comprises retaining elements (9) welded to the titanium structural bar (6).

2. Dental prosthesis according to claim 1, **characterized in that** the abutments (5), the titanium structural bar (6) and the retaining elements (9) are made of Titanium grade 5.

3. Method for manufacturing the dental prosthesis of claim 1 comprising the following steps:
a) a forming step of a set of teeth (2),
b) a coupling step of a set of abutments (5) to a set of implant analogues (4),
c) a forming step of a titanium structural bar (6) comprising a folding substep for the structural titanium bar (6) to be adapted to the curvature defined by the abutments (5),
d) a welding step of the set of abutments (5) to the titanium structural bar (6),
e) a step of attachment of the set of teeth (2) to the abutments (5) and to the titanium structural bar (6) by means of filling composite (10),
**characterised in that** it also comprises:
step f) between steps d) and e) a welding step of retaining elements (9) to the titanium structural bar (6).

## Patentansprüche

1. Zahnersatz, der Folgendes umfasst:
• einen Satz Zähne (2),
• einen Satz Brückenpfeiler (5), der mit einem Satz Implantate (4) gekoppelt werden kann und
• eine Strukturstange aus Titan (6), die mit diesen Brückenpfeilern (5) verschweißt ist,
wobei die Zähne (2) mit Füllungsverbundmaterial (10) an den Brückenpfeilern (5) und der Strukturstange aus Titan (6) befestigt sind, **dadurch gekennzeichnet**, das dieser außerdem Rückhalteelemente (9) umfasst, die mit der Strukturstange aus Titan (6) verschweißt sind.

2. Zahnersatz nach Anspruch 1, **dadurch gekennzeichnet, dass** die Brückenpfeiler (5), die Strukturstange aus Titan (6) und die Rückhalteelemente (9) aus Titan Grad 5 gefertigt sind.

3. Verfahren zur Herstellung des Zahnersatzes nach Anspruch 1, das die folgenden Schritte umfasst:
a) einen Schritt zur Bildung eines Satzes von Zähnen (2),
b) einen Schritt zur Kupplung eines Satzes von Brückenpfeilern (5) mit einem Satz von Implantat-Gegenstücken (4),
c) einen Schritt zur Bildung einer Strukturstange aus Titan (6), der einen Unterschritt zur Faltung umfasst, um die Strukturstange aus Titan (6) an die von den Brückenpfeilern (5) definierte Krümmung anzupassen,
d) einen Schritt zur Schweißung der Brückenpfeiler (5) an die Strukturstange aus Titan (6),
e) einen Schritt, um den Satz von Zähnen (2) mit dem Füllungsverbundmaterial (10) an den Brückenpfeilern (5) und der Strukturstange aus Titan (6) zu befestigen,
**dadurch gekennzeichnet, dass** dieses außerdem umfasst:
Schritt f) zwischen Schritt d) und e),
- einen Schritt der Verschweißung der Rückhalteelemente (9) mit der Strukturstange aus Titan (6).

## Revendications

1. Prothèse dentaire comprenant :
• un ensemble de dents (2),
• un ensemble de piliers (5) qui peut être couplé à un ensemble d'implants (4) et,
• une barre de structure en titane (6) soudée auxdits piliers (5),
dans laquelle les dents (2) sont fixées aux piliers (5) et à la barre de structure en titane (6) au moyen d'un composite d'obturation (10),
**caractérisée en ce qu'**elle comprend également des éléments de retenue (9) soudés à la barre de structure en titane (6).

2. Prothèse dentaire selon la revendication 1, **caractérisée en ce que** les piliers (5), la barre de structure en titane (6) et les éléments de retenue (9) sont fabriqués en titane de grade 5.

3. Procédé de fabrication de la prothèse dentaire de la revendication 1 comprenant les étapes suivantes :
a) une étape de formage d'un ensemble de dents (2),
b) une étape de couplage d'un ensemble de piliers (5) à un ensemble d'analogues d'implant (4),
c) une étape de formage d'une barre de structure en titane (6) comprenant une sous-étape de pliage pour que la barre de structure en titane (6) soit adaptée à la courbure définie par les piliers (5),
d) une étape de soudage de l'ensemble de piliers (5) à la barre de structure en titane (6),
e) une étape de fixation de l'ensemble de dents (2) aux piliers (5) et à la barre de structure en titane (6) au moyen d'un composite d'obturation (10), **caractérisé en ce qu'**il comprend également :
l'étape f) entre les étapes d) et e)
- une étape de soudage d'éléments de retenue (9) à la barre de structure en titane (6).
